(19) Europäisches Patentamt
European Patent Office
Office européen des brevets

(11) EP 2 123 685 A1

(12) EUROPEAN PATENT APPLICATION
published in accordance with Art. 153(4) EPC

(43) Date of publication:
**25.11.2009 Bulletin 2009/48**

(21) Application number: **08722004.2**

(22) Date of filing: **13.03.2008**

(51) Int Cl.:
***C08F 4/6592*** *(2006.01)* ***C08F 210/08*** *(2006.01)*

(86) International application number:
**PCT/JP2008/054600**

(87) International publication number:
**WO 2008/111638 (18.09.2008 Gazette 2008/38)**

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **14.03.2007 JP 2007064804**

(71) Applicant: **Sumitomo Chemical Company, Limited**
**Tokyo 104-8260 (JP)**

(72) Inventors:
- **HINO, Takahiro**
**Toyonaka-shi**
**Osaka 561-0802 (JP)**
- **HANAOKA, Hidenori**
**Suita-shi**
**Osaka 565-0874 (JP)**
- **SENDA, Taichi**
**Takatsuki-shi**
**Osaka 569-1124 (JP)**

(74) Representative: **Vossius & Partner**
**Siebertstraße 4**
**81675 München (DE)**

# (54) METHOD FOR PRODUCING BUTENE-ETHYLENE COPOLYMER

(57) A process for producing a butene-ethylene copolymer which has 1-butene content of 60% by mol or more, Mw of 200,000 or more, and Mw/Mn of 3 or less, the process including a step of copolymerizing 1-butene and ethylene in the presence of a catalyst for polymerizing olefin, and said catalyst containing a transition metal complex of the following formula (1) as a catalytic component:

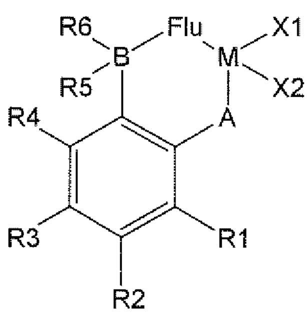

(1)

in which M represents a transition metal atom of Group 4 of the periodic table; A represents an atom of Group 16 of the periodic table; B represents an atom of Group 14 of the periodic table; Flu represents a group having a fluorenyl anion backbone; X1 and X2 represent independently of one another a hydrogen atom, a halogen atom, or an alkyl group, an aralkyl group, an aryl group, an alkoxy group, an aralkyloxy group or an aryloxy group, each of which may be optionally substituted with a halogen atom, or a di-hydrocarbon-substituted amino group; R1, R2, R3 and R4 represent independently of one another a hydrogen atom, a halogen atom, or an alkyl group, an aralkyl group, an aryl group, a hydrocarbon-substituted silyl group, an alkoxy group, an aralkyloxy group or an aryloxy group, each of which may be optionally substituted with a halogen atom, or a di-hydrocarbon-substituted amino group; and R5 and R6 represent independently of one another a hydrogen atom, or an alkyl group, an aralkyl group, an aryl group, a hydrocarbon-substituted silyl group, an alkoxy group, an aralkyloxy group or an aryloxy group, each of which may be optionally substituted with a halogen atom, or a di-hydrocarbon-substituted amino group, with the proviso that adjacent groups among the substituents R1, R2, R3, R4, R5 and R6 may be optionally bonded to each other to form a ring). According to this process, a high molecular weight ethylene-butene copolymer having a high 1-butene content can be obtained.

EP 2 123 685 A1

## Description

FIELD OF THE INVENTION

The present invention relates to a novel process for producing a butene-ethylene copolymer.

BACKGROUND ART

Hitherto, many processes have been developed for producing olefin polymers using metallocene complexes. For example, JP-A-58-19309 discloses a process for producing an olefin polymer using a metallocene complex and an aluminoxane. When an olefin is polymerized in the presence of a catalyst comprising this metallocene complex (e.g., bis(cyclopentadienyl)zirconium dichloride) and an aluminoxane (e.g., methyl aluminoxane), only an olefin polymer having a low molecular weight is produced. As the method for solving such a drawback, for example, JP-A-9-87313 discloses a process for producing an ethylene-hexene-1 copolymer using a transition metal complex with a ligand comprising an aromatic ring having a hetero atom as a substituent and a cyclopentadienyl ring which are linked to each other through a covalent bond. This process can produce a high molecular weight ethylene-hexene-1 copolymer while maintaining a high activity of the catalyst. However, when an ethylene-based copolymer is produced in the presence of this catalyst system, the molecular weight of a produced copolymer usually tends to decrease as an $\alpha$-olefin content in the copolymer increases.

SUMMARY OF THE INVENTION

Problem to be Solved by the Invention

An object of the present invention is to provide a process for producing a high molecular weight ethylene-butene copolymer, even when an ethylene-butene copolymer having a high 1-butene content is produced. Such a high molecular weight ethylene-butene copolymer having a high 1-butene content is useful for the production of molded articles or as an additive to other polyolefins.

Means for Solving the Problem

The present invention provides a process for producing a butene-ethylene copolymer having 1-butene content of 60% by mol or more, Mw of 200,000 or more and Mw/Mn of 3 or less, the process comprising a step of copolymerizing 1-butene and ethylene in the presence of a catalyst for olefin polymerization, and the catalyst containing, as a catalytic component, a transition metal complex of the following formula (1):

Formula (1):

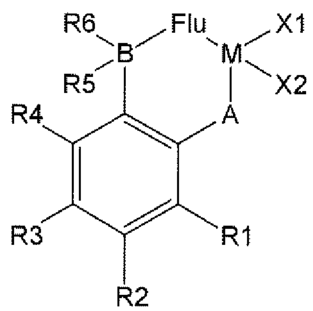

(1)

wherein M represents a transition metal atom of Group 4 of the periodic table;

A represents an atom of Group 16 of the periodic table;
B represents an atom of Group 14 of the periodic table;
Flu represents a group having a fluorenyl anion backbone;

X1 and X2 represent independently of one another a hydrogen atom, a halogen atom, a $C_1$-$C_{20}$-alkyl group optionally substituted with a halogen atom, a $C_7$-$C_{20}$-aralkyl group optionally substituted with a halogen atom, a $C_6$-$C_{20}$-aryl group optionally substituted with a halogen atom, a $C_1$-$C_{20}$-alkoxy group optionally substituted with a halogen atom, a $C_7$-$C_{20}$-aralkyloxy group optionally substituted with a halogen atom, a $C_6$-$C_{20}$-aryloxy group optionally substituted with a halogen atom, or a di-$C_2$-$C_{20}$-hydrocarbon-substituted amino group;

R1, R2, R3 and R4 represent independently of one another a hydrogen atom, a halogen atom, a $C_1$-$C_{20}$-alkyl group optionally substituted with a halogen atom, a $C_7$-$C_{20}$-aralkyl group optionally substituted with a halogen atom, a $C_6$-$C_{20}$-aryl group optionally substituted with a halogen atom, a $C_1$-$C_{20}$-hydrocarbon-substituted silyl group optionally substituted with a halogen atom, a $C_1$-$C_{20}$-alkoxy group optionally substituted with a halogen atom, a $C_7$-$C_{20}$-aralkyloxy group optionally substituted with a halogen atom, a $C_6$-$C_{20}$-aryloxy group optionally substituted with a halogen atom, or a di-$C_2$-$C_{20}$ hydrocarbon-substituted amino group; and

R5 and R6 represent independently of one another a hydrogen atom, a $C_1$-$C_{20}$-alkyl group optionally substituted with a halogen atom, a $C_7$-$C_{20}$-aralkyl group optionally substituted with a halogen atom, a $C_6$-$C_{20}$-aryl group optionally substituted with a halogen atom, a $C_1$-$C_{20}$-hydrocarbon-substituted silyl group in which the hydrocarbon is optionally substituted with a halogen atom, a $C_1$-$C_{20}$-alkoxy group optionally substituted with a halogen atom, a $C_7$-$C_{20}$-aralkyloxy group optionally substituted with a halogen atom, a $C_6$-$C_{20}$-aryloxy group optionally substituted with a halogen atom, or a di-$C_2$-$C_{20}$-hydrocarbon-substituted amino group,

with the proviso that adjacent groups among the substituents R1, R2, R3, R4, R5 and R6 may be optionally bonded to each other to form a ring.

## EFFECT OF THE INVENTION

According to the present invention, a high molecular weight butene-ethylene copolymer having high 1-butene content can be efficiently produced.

## DETAILED DESCRIPTION OF THE INVENTION

Hereinafter, the present invention will be described in detail.

In the transition metal complex of the formula (1) (hereinafter referred to as the transition metal complex (1)), the transition metal atom represented by M is a transition metal atom of Group 4 of the periodic table (IUPAC Nomenclature of Inorganic Chemistry, Revised Edition, 1989), and examples thereof include a titanium atom, a zirconium atom and a hafnium atom. Among them, a titanium atom is preferable.

Examples of the atom of Group 16 of the periodic table, represent by A, include an oxygen atom, a sulfur atom and a selenium atom. Among them, an oxygen atom is preferable.

Examples of the atom of Group 14 of the periodic table, represent by B, include a carbon atom, a silicon atom and a germanium atom. Among them, a silicon atom is preferable.

Examples of the group having a fluorenyl anion backbone represented by the substituent Flu include a fluorenyl group, a 1-methylfluorenyl group, a 2-methylfluorenyl group, a 3-methylfluorenyl group, a 4-methylfluorenyl group, a 1-tert-butylfluorenyl group, a 2-tert-butylfluorenyl group, a 3-tert-butylfluorenyl group, a 4-tert-butylfluorenyl group, a 1-phenylfluorenyl group, a 2-phenylfluorenyl group, a 3-phenylfluorenyl group, a 4-phenylfluorenyl group, a 1,8-dimethylfluorenyl group, a 2,7-dimethylfluorenyl group, a 3,6-dimethylfluorenyl group, a 4,5-dimethylfluorenyl group, a 1,8-di-tert-butylfluorenyl group, a 2,7-di-tert-butylfluorenyl group, a 3,6-di-tert-butylfluorenyl group, a 4,5-di-tert-butylfluorenyl group, a 1,8-diphenylfluorenyl group, a 2,7-diphenylfluorenyl group, a 3,6-diphenylfluorenyl group and a 4,5-diphenylfluorenyl group. Among them, a fluorenyl group and a 2,7-diphenylfluorenyl group are preferable.

Examples of the halogen atom for the substituents X1, X2, R1, R2, R3 and R4 include a fluorine atom, a chlorine atom, a bromine atom and an iodine atom. Among them, a chlorine atom is preferable.

Examples of the alkyl group having 1 to 20 carbon atoms for the substituents X1, X2, R1, R2, R3, R4, R5 and R6 include a methyl group, an ethyl group, a n-propyl group, an isopropyl group, a n-butyl group, a sec-butyl group, a tert-butyl group, a n-pentyl group, a neopentyl group, an amyl group, a n-hexyl group, a n-octyl group, a n-decyl group, a n-dodecyl group, a n-pentadecyl group and a n-eicosyl group. Among them, a methyl group, an ethyl group, an isopropyl group, a tert-butyl group and an amyl group are preferable.

Each of the alkyl groups may be substituted with a halogen atom such as a fluorine atom, a chlorine atom, a bromine atom and an iodine atom. Examples of the halogen-substituted alkyl group having 1 to 20 carbon atoms include a fluoromethyl group, a difluoromethyl group, a trifluoromethyl group, a chloromethyl group, a dichloromethyl group, a trichloromethyl group, a bromomethyl group, a dibromomethyl group, a tribromomethyl group, an iodomethyl group, a diiodomethyl group, a triiodomethyl group, a fluoroethyl group, a difluoroethyl group, a trifluoroethyl group, a tetrafluoroethyl group, a pentafluoroethyl group, a chloroethyl group, a dichloroethyl group, a trichloroethyl group, a tetrachloroethyl group, a pentachloroethyl group, a bromoethyl group, a dibromoethyl group, a tribromoethyl group, a tetrabromoethyl

group, a pentabromoethyl group, a perfluoropropyl group, a perfluorobutyl group, a perfluoropentyl group, a perfluorohexyl group, a perfluorooctyl group, a perfluorododecyl group, a perfluoropentadecyl group, a perfluoroeicosyl group, a perchloropropyl group, a perchlorobutyl group, a perchloropentyl group, a perchlorohexyl group, a perchlorooctyl group, a perchlorododecyl group, a perchloropentadecyl group, a perchloroeicosyl group, a perbromopropyl group, a perbromobutyl group, a perbromopentyl group, a perbromohexyl group, a perbromooctyl group, a perbromododecyl group, a perbromopentadecyl group and a perbromoeicosyl.

Examples of the aralkyl group having 7 to 20 carbon atoms for the substituent X1, X2, R1, R2, R3, R4, R5 and R6 include a benzyl group, a (2-methylphenyl)methyl group, a (3-methylphenyl)methyl group, a (4-methylphenyl)-methyl group, a (2,3-dimethylphenyl)methyl group, a (2,4-dimethylphenyl)methyl group, a (2,5-dimethylphenyl)methylgroup, a (2,6-dimethylphenyl)methyl group, a (3,4-dimethylphenyl)methyl group, a (4,6-dimethylphenyl)methyl group, a (2,3,4-trimethylphenyl)methyl group, a (2,3,5-trimethylphenyl)methyl group, a (2,3,6-trimethylphenyl)-methyl group, a (3,4,5-trimethylphenyl)methyl group, a (2,4,6-trimethylphenyl)methyl group, a (2,3,4,5-tetramethylphenyl)methyl group, a (2,3,4,6-tetramethylphenyl)methyl group, a (2,3,5,6-tetramethylphenyl)methyl group, a (pentamethylphenyl)methyl group, an (ethylphenyl)-methyl group, a (n-propylphenyl)methyl group, an (isopropylphenyl)methyl group, a (n-butylphenyl)methyl group, a (sec-butylphenyl)methyl group, a (tert-butylphenyl)methyl group, a (n-pentylphenyl)methyl group, a (neopentylphenyl)methyl group, a (n-hexylphenyl)methyl group, a (n-octylphenyl)methyl group, a (n-decylphenyl)-methyl group, a (n-decylphenyl)methyl group, a (n-tetradecylphenyl)methyl group, a naphthylmethyl group and an anthracenylmethyl group. Among them, a benzyl group is preferable.

Each of the aralkyl groups may be substituted with a halogen atom such as a fluorine atom, a chlorine atom, a bromine atom and an iodine atom.

Examples of the aryl group having 6 to 20 carbon atoms for the substituents X1, X2, R1, R2, R3, R4, R5 and R6 include a phenyl group, a 2-tolyl group, a 3-tolyl group, a 4-tolyl group, a 2,3-xylyl group, a 2,4-xylyl group, a 2,5-xylyl group, a 2,6-xylyl group, a 3,4-xylyl group, a 3,5-xylyl group, a 2,3,4-trimethylphenyl group, a 2,3,5-trimethylphenyl group, a 2,3,6-trimethylphenyl group, a 2,4,6-trimethylphenyl group, a 3,4,5-trimethylphenyl group, a 2,3,4,5-tetramethylphenyl group, a 2,3,4,6-tetramethylphenyl group, a 2,3,5,6-tetramethylphenyl group, a pentamethylphenyl group, an ethylphenyl group, a n-propylphenyl group, an isopropylphenyl group, a n-butylphenyl group, a sec-butylphenyl group, a tert-butylphenyl group, a n-pentylphenyl group, a neopentylphenyl group, a n-hexylphenyl group, a n-octylphenyl group, a n-decylphenyl group, a n-dodecylphenyl group, a n-tetradecylphenyl group, a naphthyl group and an anthracenyl group. Among them, a phenyl is preferable.

Each of the aryl groups may be substituted with a halogen atom such as a fluorine atom, a chlorine atom, a bromine atom and an iodine atom.

The hydrocarbon-substituted silyl group for the substituents R1 R2, R3, R4, R5 and R6 is a silyl group which is substituted with a hydrocarbon group having 1 to 20 carbon atoms. Examples of the hydrocarbon group include an alkyl group having 1 to 10 carbon atoms such as a methyl group, an ethyl group, a n-propyl group, an isopropyl group, a n-butyl group, a sec-butyl group, a tert-butyl group, an isobutyl group, a n-pentyl group, a n-hexyl group, a cyclohexyl group; and an aryl group such as a phenyl group. Examples of the $C_1$-$C_{20}$-hydrocarbon-substituted silyl group include mono-$C_1$-$C_{20}$-hydrocarbon-substituted silyl groups such as a methylsilyl group, an ethylsilyl group and a phenylsilyl group.; di-$C_1$-$C_{20}$-hydrocarbon-substituted silyl groups such as a dimethylsilyl group and a diethylsilyl group, a diphenylsilyl group; and tri-$C_1$-$C_{20}$-hydrocarbon-substituted silyl groups such as a trimethylsilyl group, a triethylsilyl group, a tri-n-propylsilyl group, a triisopropylsilyl group, a tri-n-butylsilyl group, a trisec-butylsilyl group, a tri-tert-butylsilyl group, a triisobutylsilyl group, a tert-butyl-dimethylsilyl group, a tri-n-pentylsilyl group, a tri-n-hexylsilyl group, a tricyciohexylsilyl group and a triphenylsilyl group. Among them, a trimethylsilyl group, a tert-butyldimethylsilyl group and a triphenylsilyl group are preferable.

The hydrocarbon group(s) of each of the hydrocarbon-substituted silyl groups may be substituted with a halogen atom such as a fluorine atom, a chlorine atom, a bromine atom and an iodine atom.

Examples of the alkoxy groups having 1 to 20 carbon atoms for the substituents X1, X2, R1, R2, R3, R4, R5 and R6 include a methoxy group, an ethoxy group, a n-propoxy group, an isopropoxy group, a n-butoxy group, a sec-butoxy group, a tert-butoxy group, a n-pentoxy group, a neopentoxy group, a n-hexoxy group, a n-octoxy group, a n-dodecoxy group, a n-pentadecoxy group and a n-icosoxy. Among them, a methoxy group, an ethoxy group and a tert-butoxy group are preferable.

Each of the alkoxy groups may be substituted with a halogen atom such as a fluorine atom, a chlorine atom, a bromine atom and an iodine atom.

Examples of the aralkyloxy groups having 7 to 20 carbon atoms for the substituents X1, X2, R1, R2, R3, R4, R5 and R6 include a benzyloxy group, a (2-methylphenyl)methoxy group, a (3-methylphenyl)methoxy group, a (4-methylphenyl)methoxy group, a (2,3-dimethylphenyl)-methoxy group, a (2,4-dimethylphenyl)methoxy group, a (2,5-dimethylphenyl)methoxy group, a (2,6-dimethylphenyl)methoxy group, a (3,4-dimethylphenyl)methoxy group, a (3,5-dimethylphenyl)methoxy group, a (2,3,4-trimethylphenyl)methoxy group, a (2,3,5-trimethylphenyl)methoxy group, a (2,3,6-trimethylphenyl)methoxy group, a (2,4,5-trimethylphenyl)methoxy group, a (2,4,6-trimethylphenyl)methoxy group,

a (3,4,5-trimethylphenyl)methoxy group, a (2,3,4,5-tetramethylphenyl)methoxy group, a (2,3,4,6-tetramethylphenyl) methoxy group, a (2,3,5,6-tetramethylphenyl)methoxy group, a (pentamethylphenyl)-methoxy group, an (ethylphenyl) methoxy group, a (n-propylphenyl)methoxy group, an (isopropylphenyl)methoxy group, a (n-butylphenyl)methoxy group, a (sec-butylphenyl)methoxy group, a (tert-butylphenyl)methoxy group, a (n-hexylphenyl)methoxy group, a (n-octylphenyl) methoxy group, a (n-decylphenyl)methoxy group, a (n-tetradecylphenyl)methoxy group, a naphthylmethoxy group and anthracenylmethoxy group. Among them, a benzyloxy group is preferable.
Each of the aralkyloxy groups may be substituted with a halogen atom such as a fluorine atom, a chlorine atom, a bromine atom and an iodine atom.
Examples of the aryloxy groups for the substituents X1, X2, R1, R2, R3, R4, R5 and R6 include aryloxy groups having 6 to 20 carbon atoms such as a phenoxy group, a 2-methylphenoxy group, a 3-methylphenoxy group, a 4-methylphenoxy group, a 2,3-dimethylphenoxy group, a 2,4-dimethylphenoxy group, a 2,5-dimethylphenoxy group, a 2,6-dimethylphenoxy group, a 3,4-dimethylphenoxy group, a 3,5-dimethylphenoxy group, a 2,3,4-trimethylphenoxy group, a 2,3,5-trimethylphenoxy group, a 2,3,6-trimethylphenoxy group, a 2,4,5-trimethylphenoxy group, a 2,4,6-trimethylphenoxy group, a 3,4,5-trimethylphenoxy group, a 2,3,4,5-tetramethylphenoxy group, a 2,3,4,6-tetramethylphenoxy group, a 2,3,5,6-tetramethylphenoxy group, a pentamethylphenoxy group, an ethylphenoxy group, a n-propylphenoxy group, an isopropylphenoxy group, a n-butylphenoxy group, a sec-butylphenoxy group, a tert-butylphenoxy group, a n-hexylphenoxy group, a n-octylphenoxy group, a n-decylphenoxy group, a n-tetradecylphenoxy group, a naphthoxy group and an anthracenoxy group.
Each of the aryloxy groups may be substituted with a halogen atom such as a fluorine atom, a chlorine atom, a bromine atom and an iodine atom.
The di-$C_2$-$C_{20}$-hydrocarbon-substituted amino group means an amino group which is substituted with two hydrocarbon groups. Examples of the hydrocarbon groups include an alkyl group having 1 to 20 carbon atoms such as a methyl group, an ethyl group, a n-propyl group, an isopropyl group, a n-butyl group, a sec-butyl group, a tert-butyl group, an isobutyl group, a n-pentyl group, a n-hexyl group and a cyclohexyl group; and an aryl group such as a phenyl group. Examples of the di-$C_1$-$C_{20}$-hydrocarbon-substituted amino groups include a dimethylamino group, a diethylamino group, a di-n-propylamino group, a diisopropylamino group, a di-n-butylamino group, a di-sec-butylamino group, a di-tert-butylamino group, a diisobutylamino group, a tert-butylisopropylamino group, a di-n-hexylamino group, a di-n-octylamino group, a di-n-decylamino group, a diphenylamino group, a bistrimethylsilylamino group and a bis-tert-butyldimethylsilylamino group. Among them, dimethylamino group and a diethylamino group are preferable.
The adjacent groups among the substituents R1, R2, R3, R4, R5 and R6 may be optionally bonded to each other to form a ring.
Preferable examples of X1 and X2 include a halogen atom, an alkyl group and an aralkyl group. Among them, a halogen atom is more preferable.
Preferable examples of R1 include a $C_1$-$C_{20}$-alkyl group optionally substituted with a halogen atom, a $C_7$-$C_{20}$-aralkyl group optionally substituted with a halogen atom, a $C_6$-$C_{20}$-aryl group optionally substituted with a halogen atom, and a $C_1$-$C_{20}$-hydrocarbon-substituted silyl group optionally substituted with a halogen atom.
Examples of the transition metal complex (1) include the following compounds:
Transition metal complexes (1) wherein B is a carbon atom: methylene(fluorenyl)(3,5-dimethyl-2-phenoxy)titanium dichloride, methylene(fluorenyl)(3-tert-butyl-2-phenoxy)titanium dichloride, methylene(fluorenyl)(3-tert-butyl-5-methyl-2-phenoxy)titanium dichloride, methylene-(fluorenyl)(3-phenyl-2-phenoxy)titanium dichloride, methylene(fluorenyl)(3-tert-butyldimethylsilyl-5-methyl-2-phenoxy)titanium dichloride, methylene(fluorenyl)(3-trimethylsilyl-5-methyl-2-phenoxy)titanium dichloride, methylene(fiuorenyl)(3-tert-butyl-5-methoxy-2-phenoxy)-titanium dichloride, methylene(fluorenyl)(3-tert-butyl-5-chloro-2-phenoxy)titanium dichloride, methylene(1-methylfluorenyl)(3-tert-butyl-5-methyl-2-phenoxy)titanium dichloride, methylene(2-methylfluorenyl)(3-tert-butyl-5-methyl-2-phenoxy)titanium dichloride, methylene(3-methylfluorenyl)(3-tert-butyl-5-methyl-2-phenoxy)titanium dichloride, methylene(4-methylfluorenyl)(3-tert-butyl-5-methyl-2-phenoxy)titanium dichloride, methylene(1-tert-butylfluorenyl)(3-tert-butyl-5-methyl-2-phenoxy)titanium dichloride, methylene(2-tert-butylfluorenyl)(3-tert-butyl-5-methyl-2-phenoxy)titanium dichloride, methylene(3-tert-butylfluorenyl)(3-tert-butyl-5-methyl-2-phenoxy)titanium dichloride, methylene(4-tert-butylfluorenyl)(3-tert-butyl-5-methyl-2-phenoxy)titanium dichloride, methylene(1-phenylfluorenyl)(3-tert-butyl-5-methyl-2-phenoxy)titanium dichloride, methylene(2-phenylfluorenyl)(3-tert-butyl-5-methyl-2-phenoxy)titanium dichloride, methylene(3-phenylfluorenyl)(3-tert-butyl-5-methyl-2-phenoxy) titanium dichloride, methylene(4-phenylfluorenyl)(3-tert-butyl-5-methyl-2-phenoxy)titanium dichloride, methylene (1,8-dimethylfluorenyl)(3-tert-butyl-5-methyl-2-phenoxy)titanium dichloride, methylene(2,7-dimethylfluorenyl)(3-tert-butyl-5-methyl-2-phenoxy)titanium dichloride, methylene(3,6-dimethylfluorenyl)(3tert-butyl-5-methyl-2-phenoxy)titanium dichloride, methylene(4,5-dimethylfluorenyl)(3-tert-butyl-5-methyl-2-phenoxy) titanium dichloride, methylene(1,8-di-tert-butylfluorenyl)(3-tert-butyl-5-methyl-2-phenoxy)-titanium dichloride, methylene(2,7-di-tert-butylfluorenyl)-(3-tert-butyl-5-methyl-2-phenoxy)titanium dichloride, methylene(3,6-di-tert-butylfluorenyl)(3-tert-butyl-5-methyl-2-phenoxy)titanium dichloride, methylene(4,5-di-tert-butylfluorenyl)(3-tert-butyl-5-methyl-2-phenoxy)-titanium dichloride, methylene (1,8-diphenylfluorenyl)(3-tert-butyl-5-methyl-2-phenoxy)titanium dichloride, methylene(2,7-diphenylfluorenyl)(3-tert-butyl-5-methyl-2-phenoxy)titanium dichloride, methylene(3,6-diphenylfluorenyl)(3-tert-butyl-5-methyl-2-phenoxy)titanium dichloride, methylene(4,5-diphenylfluorenyl)(3-tert-butyl-5-methyl-2-phenoxy)titanium dichloride,

isopropylidene(fluorenyl)(3,5-dimethyl-2-phenoxy)titanium dichloride, isopropylidene(fluorenyl)(3-tert-butyl-2-phenoxy)titanium dichloride, isopropylidene-(fluorenyl)(3-tert-butyl-5-methyl-2-phenoxy)titanium dichloride, isaprapylidene(fluorenyl)(3-phenyl-2-phenoxy)-titanium dichloride, isopropylidene(fluorenyl)(3-tert-butyldimethylsilyl-5-methyl-2-phenoxy)titanium dichloride, isopropylidene(fluorenyl)(3-trimethylsilyl-5-methyl-2-phenoxy)titanium dichloride, isopropylidene(fluorenyl)(3-tert-butyl-5-methoxy-2-phenoxy)titanium dichloride, isopropylidene(fluorenyl)(3-tert-butyl-5-chloro-2-phenoxy)-titanium dichloride, isopropylidene(1-methylfluorenyl)(3-tert-butyl-5-methyl-2-phenoxy)titanium dichloride, isopropylidene(2-methylfluorenyl)(3-tert-butyl-5-methyl-2-phenoxy)titanium dichloride, isopropylidene(3-methylfluorenyl)(3-tert-butyl-5-methyl-2-phenoxy)titanium dichloride, isopropylidene(4-methylfluorenyl)(3-tert-butyl-5-methyl-2-phenoxy) titanium dichloride, isopropylidene(1-tert-butylfluorenyl)(3-tert-butyl-5-methyl-2-phenoxy)-titanium dichloride, isopropylidene(2-tert-butylfluorenyl)-(3-tert-butyl-5-methyl-2-phenoxy)titanium dichloride, isopropylidene(3-tert-butylfluorenyl)(3-tert-butyl-5-methyl-2-phenoxy)titanium dichloride, isopropylidene(4-tert-butylfluorenyl)(3-tert-butyl-5-methyl-2-phenoxy)-titanium dichloride, isopropylidene(l-phenylfluorenyl)(3-tert-butyl-5-methyl-2-phenoxy)titanium dichloride, isopropylidene(2-phenylfluorenyl)(3-tert-butyl-5-methyl-2-phenoxy)titanium dichloride, isopropylidene(3-phenylfluorenyl)(3-tert-butyl-5-methyl-2-phenoxy)titanium dichloride, isopropylidene(4-phenylfluorenyl)(3-tert-butyl-5-methyl-2-phenoxy)titanium dichloride, isopropylidene(1,8-dimethylfluorenyl)(3-tert-butyl-5-methyl-2-phenoxy)titanium dichloride, isopropylidene(2,7-dimethylfluorenyl)(3-tert-butyl-5-methyl-2-phenoxy)titanium dichloride, isopropylidene(3,6-dimethylfluorenyl)(3-tert-butyl-5-methyl-2-phenoxy)titanium dichloride, isopropylidene(4,5-dimethylfluorenyl)(3-tert-butyl-5-methyl-2-phenoxy)titanium dichloride, isopropylidene(1,8-di-tert-butylfluorenyl)(3-tert-butyl-5-methyl-2-phenoxy)titanium dichloride, isopropylidene(2,7-di-tert-butylfluorenyl)(3-tert-butyl-5-methyl-2-phenoxy)titanium dichloride, isopropylidene (3,6-di-tert-butylfluorenyl)(3-tert-butyl-5-methyl-2-phenoxy)-titanium dichloride, isopropylidene(4,5-di-tert-butylfluorenyl)(3-tert-butyl-5-methyl-2-phenoxy)titanium dichloride, isopropylidene(1,8-diphenylfluorenyl)(3-tert-butyl-5-methyl-2-phenoxy)titanium dichloride, isopropylidene(2,7-diphenylfluorenyl)(3-tert-butyl-5-methyl-2-phenoxy)titanium dichloride, isopropylidene(3,6-diphenylfluorenyl)(3-tert-butyl-5-methyl-2-phenoxy)titanium dichloride, isopropylidene(4,5-diphenylfluorenyl)(3-tert-butyl-5-methyl-2-phenoxy)titanium dichloride,

diphenylmethylene(fluorenyl)(3,5-dimethyl-2-phenoxy)titanium dichloride, diphenylmethylene(fluorenyl)-(3-tert-butyl-2-phenoxy)titanium dichloride, diphenylmethylene(fluorenyl)(3-tert-butyl-5-methyl-2-phenoxy)-titanium dichloride, diphenylmethylene(fluorenyl)(3-phenyl-2-phenoxy)titanium dichloride, diphenylmethylene-(fluorenyl)(3-tert-butyldimethylsilyl-5-methyl-2-phenoxy)-titanium dichloride, diphenylmethylene(fluorenyl)(3-trimethylsilyl-5-methyl-2-phenoxy) titanium dichloride, diphenylmethylene(fluorenyl)(3-tert-butyl-5-methoxy-2-phenoxy) titanium dichloride, diphenylmethylene(fluorenyl)-(3-tert-butyl-5-chloro-2-phenoxy)titanium dichloride, diphenylmethylene(1-methylfluorenyl)(3-tert-butyl-5-methyl-2-phenoxy)titanium dichloride, diphenylmethylene(2-methylfluorenyl) (3-tert-butyl-5-methyl-2-phenoxy) titanium dichloride, diphenylmethylene(3-methylfluorenyl)(3-tert-butyl-5-methyl-2-phenoxy)titanium dichloride, diphenylmethylene(4-methylfluorenyl)(3-tert-butyl-5-methyl-2-phenoxy)titanium, dichloride, diphenylmethylene(1-tert-butylfluorenyl)(3-tert-butyl-5-methyl-2-phenoxy)titanium dichloride, diphenylmethylene(2-tert-butylfluorenyl)(3-tert-butyl-5-methyl-2-phenoxy)titanium dichloride, diphenylmethylene(3-tert-butylfluorenyl)(3-tert-butyl-5-methyl-2-phenoxy)titanium dichloride, diphenylmethylene(4-tert-butylfluorenyl)(3-tert-butyl-5-methyl-2-phenoxy)-titanium dichloride, diphenylmethylene(1-phenylfluorenyl)-(3-tert-butyl-5-methyl-2-phenoxy)titanium dichloride, diphenylmethylene(2-phenylfluorenyl)(3-tert-butyl-5-methyl-2-phenoxy)titanium dichloride, diphenylmethylene(3-phenylfluorenyl)(3-tert-butyl-5-methyl-2-phenoxy)titanium dichloride, diphenylmethylene(4-phenylfluorenyl)(3-tert-butyl-5-methyl-2-phenoxy)titanium dichloride, diphenylmethylene(1,8-dimethylfluorenyl) (3-tert-butyl-5-methyl-2-phenoxy)titanium dichloride, diphenylmethylene(2,7-dimethylfluorenyl)(3-tert-butyl-5-methyl-2-phenoxy)titanium dichloride, diphenylmethylene(3,6-dimethylfluorenyl) (3-tert-butyl-5-methyl-2-phenoxy)titanium dichloride, diphenylmethylene(4,5-dimethylfluorenyl)(3-tert-butyl-5-methyl-2-phenoxy)titanium dichloride, diphenylmethylene-(1,8-di-tert-butylfluorenyl)(3-tert-butyl-5-methyl-2-phenoxy)titanium dichloride, diphenylmethylene(2,7-di-tert-butylfluorenyl)(3-tert-butyl-5-methyl-2-phenoxy)titanium dichloride, diphenylmethylene(3,6-di-tert-butylfluorenyl)-(3-tert-butyl-5-methyl-2-phenoxy)titanium dichloride, diphenylmethylene(4,5-di-tert-butylfluorenyl)(3-tert-butyl-5-methyl-2-phenoxy)titanium dichloride, diphenylmethylene-(1,8-diphenylfluorenyl)(3-tert-butyl-5-methyl-2-phenoxy)-titanium dichloride, diphenylmethylene(2,7-diphenylfluorenyl)(3-tert-butyl-5-methyl-2-phenoxy)titanium dichloride, diphenylmethylene(3,6-diphenylfluorenyl)(3-tert-butyl-5-methyl-2-phenoxy)titanium dichloride and diphenylmethylene(4,5-diphenylfluorenyl)(3-tert-butyl-5-methyl-2-phenoxy)titanium dichloride; and the above compounds in which titanium is replaced by zirconium or hafnium; the above compounds in which chloride is replaced by bromide, iodide, dimethylamide, diethylamide, n-butoxide or isopropoxide; the above compounds in which 3,5-dimethyl-2-phenoxy is replaced by 2-phenoxy, 3-methyl-2-phenoxy, 3,5-di-tert-butyl-2-phenoxy, 3-phenyl-5-methyl-2-phenoxy, 3-tert-butyldimethylsilyl-2-phenoxy or 3-trimethylsilyl-2-phenoxy; and the above compounds in which methylene is replaced by diethylmethylene.

Transition metal complexes (1) wherein B is one of Group 14 elements of the periodic table other than a carbon atom:

dimethylsilyl(fluorenyl)(2-phenoxy)titanium dichloride, dimethylsilyl(fluorenyl)(3-methyl-2-phenoxy)titanium dichloride, dimethylsilyl(fluorenyl)(3,5-dimethyl-2-phenoxy)titanium dichloride, dimethylsilyl(fluorenyl)(3-tert-butyl-2-phenoxy)titanium dichloride, dimethylsilyl-(fluorenyl)(3-tert-butyl-5-methyl-2-phenoxy)titanium dichloride, dimethylsilyl(fluorenyl)(3,5-di-tert-butyl-2-phenoxy)titanium dichloride, dimethylsilyl(fluorenyl)(5-methyl-3-phenyl-2-phenoxy)titanium dichloride, dimethylsilyl(fluorenyl)(3-tert-butyidimethylsilyl-5-methyl-2-phenoxy)titanium dichloride, dimethylsilyl-(fluorenyl)(5-methyl-3-trimethylsilyl-2-phenoxy)titanium dichloride, dimethylsilyl(fluorenyl)(3-tert-butyl-5-methoxy-2-phenoxy)titanium dichloride, dimethylsilyl-(fiuorenyl)(3-tert-butyl-5-chloro-2-phenoxy)titanium dichloride and dimethylsilyl(fluorenyl)(3,5-diamyl-2-phenoxy)-titanium dichloride; the above compounds in which (fluorenyl) is replaced by (1-methylfluorenyl), (2-methylfluorenyl), (3-methylfluorenyl), (4-methylfluorenyl), (1-tert-butylfluorenyl), (2-tert-butylfluorenyl), (3-tert-butylfluorenyl), (4-tert-butylfluorenyl), (1-phenylfluorenyl), (2-phenylfluorenyl), (3-phenylfluorenyl), (4-phenylfluorenyl), (1,8-dimethylfluorenyl), (2,7-dimethylfluorenyl), (3,6-dimethylfluorenyl), (4, 5-dimethylfluorenyl), (1,8-di-tert-butylfluorenyl), (2,7-di-tert-butylfluorenyl), (3,6-di-tert-butylfluorenyl), (4,5-di-tert-butylfluorenyl), (1,8-diphenylfluorenyl), (2,7-diphenylfluorenyl), (3,6-diphenylfluorenyl) or (4,5-diphenylfluorenyl); the above compounds in which 2-phenoxy is replaced by 3-phenyl-2-phenoxy, 3-trimethylsilyl-2-phenoxy, or 3-tert-butyldimethylsilyl-2-phenoxy; the above compounds in which dimethylsilyl is replaced by diethylsilyl, diphenylsilyl or dimethoxysilyl; the above compounds in which titanium is replaced by zirconium or hafnium; and the above compounds in which chloride is replaced by bromide, iodide, dimethylamide, diethylamide, n-butoxide or isopropoxide.

The transition metal complex (1) of the present invention may be synthesized by any of known methods, for example, a method described in JP-A-9-87313.

In the present invention, the following compound (B), or the compound (B) and the following compound (C) may be used as a promoter in the course of polymerization:

(B) any of the following compounds (B1) to (B3) or a mixture of two or three of them:

(B1) an organoaluminum compound of the formula:

$$El_aAlZ_{3-a},$$

(B2) a cyclic aluminoxane having a structure of the formula: $\{-Al(E2)-O-\}_b$, and

(B3) a linear aluminoxane having a structure of the formula: $E3\{-Al(E3)-O-\}_cAl(E3)_2$

wherein each of E1 to E3 represents a $C_1$-$C_8$ hydrocarbon group, with the proviso that all the groups E1, all the groups E2 and all the groups E3 may be the same as or different from one another, respectively; Z represents a hydrogen atom or a halogen atom, with the proviso that all the groups Z may be the same as or different from one another; a is a number satisfying the equation of $0 < a \leq 3$; b is an integer of 2 or more; and c is an integer of 1 or more; and

(C) any of the following compounds (C1) to (C3):

(C1) a boron compound of the formula:

$$BQ1\ Q2\ Q3,$$

(C2) a boron compound of the formula:

$$Z^+(BQ1\ Q2\ Q3\ Q^4)^-,$$

(C3) a boron compound of the formula:

$$(L-H)^+(BQ1\ Q2\ Q3\ Q4)^-$$

wherein B represents a trivalent boron atom; each of Q1 to Q4 represents a halogen atom, a $C_1$-$C_{20}$ hydrocarbon group, a halogenated $C_1$-$C_{20}$-hydrocarbon group, a $C_1$-$C_{20}$-hydrocarbon-substituted silyl group, a $C_1$-$C_{20}$-alkoxy group or a di-$C_2$-$C_{20}$ hydrocarbon-substituted amino group, with the proviso that the groups Q1 to Q4 may be the same as or different from one another.

As the compound (B) to be used in the present invention, any of known organoaluminum compounds may be used. Preferably used is any of the organoaluminum compound (B1) of the formula: $El_aAlZ_{3-a}$, the cyclic aluminoxane

(B2) having the structure of the formula: {-Al(E2)-O-}$_b$, and the linear aluminoxane (B3) having the structure of the formula: E3{-Al(E3)-O-}$_c$Al(E3)$_2$, or a mixture of two or three of them, wherein each of E1, E2 and E3 represents a $C_1$-$C_8$ hydrocarbon group, with the proviso that all the groups E1, all the groups E2 and all the groups E3 may be the same as or different from one another, respectively; Z represents a hydrogen atom or a halogen atom, with the proviso that all the groups Z may be the same as or different from one another; a is a number satisfying the equation of $0 < a \leq 3$; b is an integer of 2 or more; and c is an integer of 1 or more.

Specific examples of the organoaluminum compound (B1) of the formula: El$_a$AlZ$_{3-a}$ include trialkylaluminum such as trimethylaluminum, triethylaluminum, tripropylaluminum, triisobutylaluminum and trihexylaluminum; dialkylaiuminum chloride such as dimethylaluminum chloride, diethylaluminum chloride, dipropylaluminum chloride, diisobutylaluminum chloride and dihexylaluminum chloride; alkylaluminum dichloride such as methylaluminum dichloride, ethylaluminum dichloride, propylaluminum dichloride, isobutylaluminum dichloride and hexylaluminum dichloride; and dialkylaluminum hydride such as dimethylaluminum hydride, diethylaluminum hydride, dipropylaluminum hydride, diisobutylaluminum hydride and dihexylaluminum hydride.
Among them, a trialkylaluminum is preferable, and triethylaluminum and triisobutylaluminum are more preferable.

In the cyclic aluminoxane (B2) having the structure of the formula: {-Al(E2)-O-}$_b$, and the linear aluminoxane (B3) having the structure of the formula: E3{-Al(E3)-Q-}$_c$Al(E3)$_2$, specific examples of E2 and E3 include alkyl groups such as a methyl group, an ethyl group, a n-propyl group, an isopropyl group, a n-butyl group, an isobutyl group, a n-pentyl group and a neopentyl group; and b is an integer of 2 or more, and c is an integer of 1 or more. Preferably, each of E2 and E3 is a methyl group or an isobutyl group; and b is an integer of from 2 to 40, and c is an integer of from 1 to 40.

The aluminoxanes described above are prepared by various methods. While the preparation methods are not particularly limited, the aluminoxanes may be prepared by known methods. For example, the aluminoxane is prepared by bringing a solution of a trialkylaluminum (e.g., trimethylaluminum) in an appropriate organic solvent (e.g., benzene or aliphatic hydrocarbon) into contact with water, or by bringing a trialkylaluminum (e.g., trimethylaluminum) into contact with a metal salt containing crystal water (e.g., copper sulfate hydrate).

In the present invention, as the compound (C), any of the boron compound (C1) of the formula: BQ1 Q2 Q3, the boron compound (C2) of the formula: $Z^+$(BQ1 Q2 Q3 Q4)$^-$ and the boron compound (C3) of the formula: (L-H)$^+$(BQ1 Q2 Q3 Q4)$^-$ is used.

In the boron compound (C1) of the formula: BQ1 Q2 Q3, B is a trivalent boron atom; each of Q1 to Q3 is a halogen atom, a $C_1$-$C_{20}$ hydrocarbon group, a halogenated $C_1$-$C_{20}$-hydrocarbon group, a $C_1$-$C_{20}$-hydrocarbon-substituted silyl group, a $C_1$-$C_{20}$-alkoxy group or a di -$C_2$-$C_{20}$ hydrocarbon-substituted amino group, with the proviso that Q1 to Q3 may be the same as or different from one another. Each of Q1 to Q3 is preferably a halogen atom, a $C_1$-$C_{20}$ hydrocarbon group, or a halogenated $C_1$-$C_{20}$-hydrocarbon group.

Specific examples of the Lewis acid (C1) include tris(pentafluorophenyl)borane, tris(2,3,5,6-tetrafluorophenyl) borane, tris(2,3,4,5-tetrafluorophenyl)borane, tris(3,4,5-trifluoroph.enyl)borane, tris(2,3,4-trifluorophenyl)borane, and phenylbis(pentafluorophenyl)borane. The most preferable Lewis acid is tris(pentafiuorophenyl)borane.

In the boron compound (C2) of the formula: $Z^+$(BQ1 Q2 Q3 Q4)$^-$, $Z^+$ is an inorganic or organic cation; B is a trivalent boron atom; and each of Q1 to Q4 is the same as defined for each of Q1 to Q3 of the boron compound (C1).

In the compound of the formula: $Z^+$(BQ1 Q2 Q3 Q4)$^-$, examples of $Z^+$ which is an inorganic cation include a ferrocenium cation, an alkyl-substituted ferrocenium cation and a silver cation; and examples of $Z^+$ which is an organic cation include a triphenylmethyl cation. Examples of the moiety (BQ1 Q2 Q3 Q4)$^-$ include tetrakis(pentafluorophenyl) borate, tetrak-s(2,3,5,6-tetrafluorophenyl)borate, tetrakis(2,3,4,5-tetrafluorophenyl)borate, tetrakis(3,4,5-tri-fluorophenyl)borate, tetrakis(2,2,4-trifluorophenyl)borate, phenyl-bis(pentafluorophenyl)borate and tetrakis(3,5-bistrifluoromethylphenyl)borate.

Specific examples of the compound of the formula: $Z^+$(BQ1 Q2 Q3 Q4)$^-$ include ferrocenium tetrakis(pentafluorophenyl)borate, 1,1'-dimethylferrocenium tetrakis(pentafluorophenyl)borate, silver tetrakis(pentafluorophenyl)borate, triphenylmethyltetrakis(pentafluorophenyl)borate and triphenylmethyltetrakis(3,5-bis-trifluoromethylphenyl)borate. Among them, triphenylmethyl-tetrakis(pentafluorophenyl)borate is most preferable.

In the boron compound (C3) of the formula: (L-H)$^+$(BQ1 Q2 Q3 Q4)$^-$, L is a neutral Lewis base; (L-H)$^+$ is a Brønsted acid; B is a trivalent boron atom; and each of Q1 to Q4 is the same as defined for each of Q1 to Q3 of the compound (B1).

In the compound of the formula: (L-H)$^+$(BQ1 Q2 Q3 Q4)$^-$, examples of (L-H)$^+$ which is a Brønsted acid include a trialkylammonium, a N,N-dialkylanilinium, a dialkylammonium and a triarylphosphonium; and examples of (BQ1 Q2 Q3 Q4)$^-$ are the same as those described above.

Specific examples of the compound of the formula: (L-H)$^+$(BQ1 Q2 Q3 Q4)$^-$ include triethylammonium tetrakis (pentafluorophenyl)borate, tripropylammonium tetrakis(pentafluorophenyl)borate, tri(n-butyl)ammonium tetrakis(pentafluorophenyl)borate, tri(n-butyl)ammonium tetrakis(3,5-bis-trifluoromethylphenyl)borate, N,N-dimethylanilinium tetrakis(pentafluorophenyl)borate, N,N-diethylanilinium tetrakis(pentafluorophenyl)borate, N,N-2,4,6-pentamethylanilinium tetrakis(pentafluorophenyl)-borate, N,N-dimethylanilinium tetrakis(3,5-bistrifluoromethylphenyl) borate, diisopropylammonium tetrakis(pentafluorophenyl)borate, dicyclohexylammonium tetrakis(pentafluoraphenyl)borate, triphenylphosphonium tetrakis(pentafluorophenyl)borate, tri(methylphenyl)-phosphonium tetrakis(pentafluorophenyl)borate and tri(dimethylphenyl)phosphonium tetrakis(pentafluorophenyl)-borate. Among them, tri(n-butyl)ammonium tetrakis(pentafluorophenyl)borate or N,N-dimethylanilinium tetrakis(pentafluorophenyl)borate is most preferable.

In the present invention, the transition metal complex (1) and the compound (B), and further, the compound (C) may be added in an arbitrary order in the course of polymerization. Alternatively, an arbitrary combination of some of these compounds may be previously brought into contact with each other to form a reaction product for use.

Preferably, the amounts of the catalytic components should be selected so that the molar ratio of the compound (B) to the transition metal complex (1) is from 0.1 to 10,000, preferably from 5 to 2,000, and the molar ratio of the compound (C)/the transition metal complex (1) is from 0.01 to 100, preferably from 0.5 to 10.

When each of the catalytic components is used in the form of a solution, preferably, the catalytic components should be used so that the concentration of the transition metal complex (1) of the formula (1) is from 0.0001 to 5 mmol/L, preferably from 0.001 to 1 mmol/L, and the concentration of the compound (B) is from 0.01 to 500 mmol/L, preferably from 0.1 to 100 mmol/L, in terms of Al atom, and the concentration of the compound (C) is from 0.0001 to 5 mmol/L, preferably from 0.001 to 1 mmol/L.

In the present invention, the monomers for use in the polymerization are 1-butene and ethylene.

Examples of the polymerization method in the present invention include, but not limited, solvent polymerization or slurry polymerization, which uses, as a solvent, an aliphatic hydrocarbon such as butane, pentane, hexane, heptane, octane or the like, an aromatic hydrocarbon such as benzene, toluene or the like, or a halogenated hydrocarbon such as methylene dichloride or the like; bulk polymerization; and vapor phase polymerization in gaseous monomers. These polymerization methods may be carried out continuously or batchwise.

The polymerization temperature is usually from -50 to 200°C, in particular preferably from about -20 to about 100°C. The polymerization pressure is preferably from an atmospheric pressure to 6 MPa (60 kg/cm$^2$G). In general, the polymerization time is appropriately selected in accordance with the kind of an intended polymer and a reaction apparatus, and it is usually from one minute to 20 hours. In the present invention, a chain transfer agent such as hydrogen may be added in order to adjust the molecular weight of the copolymer.

## EXAMPLES

Hereinafter, the present invention will be described in more detail by the following Examples, which do not limit the scope of the present invention in any way.

The properties of the polymers in the Examples were measured by the following methods.

Molecular Weight and Molecular Weight Distribution:

RapidGPC (manufactured by Symyx) was used for the measurement under the following conditions:
Solution supplier: LC pump manufactured by Gilson, Model 305 (pump head 25.SC)
Column: Pigel Mixed-B 10 μm, 7.5 mmϕ x 300 mm manufactured by PolymerLaboratories (PL)
Mobile phase: o-Dichlorobenzene
Solvent: 1,2,4-Trichlorobenzene
Flow rate: 2 ml/min.
Column temp. 160°C
Calibration curve: Polystyrenes (PS), standard products manufactured by PL, eight PS samples
(Standard PS molecular weights) 5,000, 10,050, 28,500, 65,500, 185,400, 483,000, 1,013,000, 3,390,000

The 1-butene content in a copolymer was measured by $^1$H-NMR. The NMR measurement was conducted using EX270 (manufactured by JEOL LTD.) or DPX300 (manufactured by BRUKER), a 5 mm tube and a mixed solvent of dichlorobenzene and dichlorobenzene-$d_4$; and the 1-butene content was calculated using an integrated value of the following peaks: backbone methylene groups and methine groups (δ: 1.6-0.9), and methyl groups derived from 1-butene (δ: 0.9-0.5).

The 1-butene content is calculated by the equation: $100 \times 4\alpha/(100 - \alpha)$ (% by mol), wherein the vale of a component of the peak derived from the backbone methylene groups and the methine groups is "100", and $\alpha$ is the integrated value of the peak derived from the methyl groups. To measure this content, the following literatures were consulted:

KOBUNSHI BUNSEKI HANDBOOK (New Edition) edited by the Japan Society for Analytical Chemistry, Research Committee of Polymer Analysis (published by KINOKUNIYA COMPANY LTD), and JMS-REV. MACROMOL. CHEM. PHYS., C29 (2 & 3)(1989) 201-317 (1989) A Review of High Resolution Liquid 13-Carbon Nuclear Magnetic Resonance Characterizations of Ethylene-Based Polymers.

The differential scanning calorimetry (DSC) was conducted by using DSC6200R manufactured by Seiko Instruments Inc. under the following temperature conditions:

20°C — (20°C/min.) → 200°C (held for 10 minutes) — (-20°C/min,) → -100°C (held for 10 minutes) — (20°C/min.) → 200°C (held for 10 minutes)

Example 1

o a 300 ml autoclave, 1-butene (80 g) was charged and stabilized at 40°C. Then, ethylene was charged and compressed to 0.25 MPa, and triisobutylalminum (a solution in toluene, 100 μmol), diethylsilyl(fluorenyl)(3-tert-butyl-5-methyl-2-phenoxy)titanium dichloride (a solution in toluene, 0.1 μmol) and N,N-dimethylanilium tetrakis(pentafluorophenyl)borate (a solution in toluene, 0.6 μmol) were charged. Thereafter, the resulting mixture was polymerized at 40°C for 10 minutes. After the completion of the polymerization, a polymer was obtained in an amount of 6.2 x $10^7$ g per one mol of titanium and per one hour. The polymer had the following the properties: Mw = 620,000; Mw/Mn = 1.5 and the 1-butene content = 91% by mol. Tg was -30°C, while no melting point could be observed by DSC.

Example 2

he polymerization was conducted in the same manner as in Example 1, except that diethylsilyl(2,7-diphenylfluorenyl)(3-tert-buty-5-methyl-2-phenoxy)titanium dichloride (a solution in toluene, 0.03 μmol) was used in place of diethylsilyl(fluorenyl)(3-tert-butyl-5-methyl-2-phenoxy)titanium dichloride (a solution in toluene, 0.1 μmol). After the completion of the polymerization, a polymer was obtained in an amount of 23.2 x $10^7$ g per one mol of titanium and per one hour. The polymer had the following properties: Mw = 980,000; Mw/Mn = 1.5; and the 1-butene content = 89% by mol. Tg was -29°C, while no melting point could be observed by DSC.

Example 3

he polymerization was conducted in the same manner as in Example 2, except that ethylene was compressed to 0.10 MPa instead of 0.25 MPa. After the completion of the polymerization, a polymer was obtained in an amount of 21.4 x $10^7$ g per one mol of titanium and per one hour. The polymer had the following properties: Mw = 800,000; Mw/Mn = 1.5; and the 1-butene content = 94% by mol. Tg was -27°C, while no melting point could be observed by DSC.

Example 4

The polymerization was conducted in the same manner as in Example 2, except that ethylene was compressed to 0.05 MPa instead of 0.25 MPa. After the completion of the polymerization, a polymer was obtained in an amount of 37.4 x $10^7$ g per one mol of titanium and per one hour. The polymer had the following properties: Mw = 530,000; Mw/Mn = 1.5; and the 1-butene content = 96% by mol. Tg was -28°C, while no melting point could be observed by DSC.

Comparative Example 1

he polymerization was conducted in the same manner as in Example 1, except that dimethylsilyl(2,3,4,5-tetramethylcyclopentadienyl)(3-tert-buty-5-methyl-2-phenoxy)titanium dichloride (a solution in toluene, 0.1 μmol) was used in place of diethylsilyl(fluorenyl)(3-tert-butyl-5-methyl-2-phenoxy)titanium dichloride (a solution in toluene, 0.1 μmol). After the completion of the polymerization, a polymer was obtained in an amount of 19.1 x $10^7$ g per one mol of titanium and per one hour. The polymer had the following properties: Mw = 130,000; Mw/Mn = 1.5; the 1-butene content = 77% by mol; and Tg = -44°C, while no melting point could be observed by DSC.

## Claims

1. A process for producing a butene-ethylene copolymer having 1-butene content of 60% by mol or more, Mw of 200,000 or more and Mw/Mn of 3 or less, the process comprising a step of copolymerizing 1-butene and ethylene in the presence of a catalyst for olefin polymerization, and the catalyst containing, as a catalytic component, a

transition metal complex of the following formula (1):

Formula (1):

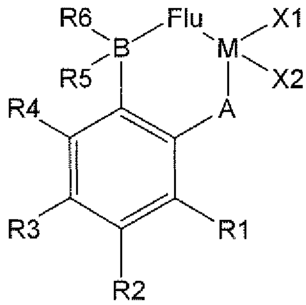

(1)

wherein M represents a transition metal atom of Group 4 of the periodic table;

A represents an atom of Group 16 of the periodic table;
B represents an atom of Group 14 of the periodic table;
Flu represents a group having a fluorenyl anion backbone;
X1 and X2 represent independently of one another a hydrogen atom, a halogen atom, a $C_1$-$C_{20}$-alkyl group optionally substituted with a halogen atom, a $C_7$-$C_{20}$-aralkyl group optionally substituted with a halogen atom, a $C_6$-$C_{20}$-aryl group optionally substituted with a halogen atom, a $C_1$-$C_{20}$-alkoxy group optionally substituted with a halogen atom, a $C_7$-$C_{20}$-aralkyloxy group optionally substituted with a halogen atom, a $C_6$-$C_{20}$-aryloxy group optionally substituted with a halogen atom, or a di-$C_2$-$C_{20}$-hydrocarbon-substituted amino group;
R1, R2, R3 and R4 represent independently of one another a hydrogen atom, a halogen atom, a $C_1$-$C_{20}$-alkyl group optionally substituted with a halogen atom, a $C_7$-$C_{20}$-aralkyl group optionally substituted with a halogen atom, a $C_6$-$C_{20}$-aryl group optionally substituted with a halogen atom, a $C_1$-$C_{20}$-hydrocarbon-substituted silyl group in which the hydrocarbon is optionally substituted with a halogen atom, a $C_1$-$C_{20}$-alkoxy group optionally substituted with a halogen atom, a $C_7$-$C_{20}$-aralkyloxy group optionally substituted with a halogen atom, a $C_6$-$C_{20}$-aryloxy group optionally substituted with a halogen atom, or a di-$C_2$-$C_{20}$ hydrocarbon-substituted amino group; and
R5 and R6 represent independently of one another a hydrogen atom, a $C_1$-$C_{20}$-alkyl group optionally substituted with a halogen atom, a $C_7$-$C_{20}$-aralkyl group optionally substituted with a halogen atom, a $C_6$-$C_{20}$-aryl group optionally substituted with a halogen atom, a $C_1$-$C_{20}$-hydrocarbon-substituted silyl group optionally substituted with a halogen atom, a $C_1$-$C_{20}$-alkoxy group optionally substituted with a halogen atom, a $C_7$-$C_{20}$-aralkyloxy group optionally substituted with a halogen atom, a $C_6$-$C_{20}$-aryloxy group optionally substituted with a halogen atom, or a di-$C_2$-$C_{20}$-hydrocarbon-substituted amino group, with the proviso that adjacent groups among the substituents R1 R2, R3, R4, R5 and R6 may be optionally bonded to each other to form a ring.

2. The process according to claim 1, wherein A in the formula (1) represents an oxygen atom.

3. The process according to claim 1 or 2, wherein M in the formula (1) represents a titanium atom.

4. The process according to any one of claims 1 to 3, wherein B in the formula (1) represents a silicon atom.

5. The process according to any one of claims 1 to 4, wherein each of X1 and X2 in the formula (1) represents independently of one another a halogen atom.

6. The process according to any one of claims 1 to 5, wherein a butene-ethylene copolymer produced has 1-butene content of 80% by mol or more, Mw of 500,000 or more, and Mw/Mn of 3 or less.

**INTERNATIONAL SEARCH REPORT**

International application No. PCT/JP2008/054600

A. CLASSIFICATION OF SUBJECT MATTER
*C08F4/6592*(2006.01)i, *C08F210/08*(2006.01)i

According to International Patent Classification (IPC) or to both national classification and IPC

B. FIELDS SEARCHED

Minimum documentation searched (classification system followed by classification symbols)
C08F4/00-82, C08F210/00-18

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2008 |
| Kokai Jitsuyo Shinan Koho | 1971-2008 | Toroku Jitsuyo Shinan Koho | 1994-2008 |

Electronic data base consulted during the international search (name of data base and, where practicable, search terms used)
WPI

C. DOCUMENTS CONSIDERED TO BE RELEVANT

| Category* | Citation of document, with indication, where appropriate, of the relevant passages | Relevant to claim No. |
|---|---|---|
| X | JP 2003-176295 A (Sumitomo Chemical Co., Ltd.), 24 June, 2003 (24.06.03), Claims; Par. Nos. [0048], [0165]; examples & US 6329478 B1 & EP 0842939 A1 & WO 1997/003992 A1 | 1-6 |
| X | JP 9-87313 A (Sumitomo Chemical Co., Ltd.), 31 March, 1997 (31.03.97), Claims; Par. Nos. [0047], [0164]; examples & US 6329478 B1 & EP 0842939 A1 & WO 1997/003992 A1 | 1-6 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 01 May, 2008 (01.05.08) | 20 May, 2008 (20.05.08) |

| Name and mailing address of the ISA/ | Authorized officer |
|---|---|
| Japanese Patent Office | |
| Facsimile No. | Telephone No. |

Form PCT/ISA/210 (second sheet) (April 2007)

**INTERNATIONAL SEARCH REPORT**

International application No.
PCT/JP2008/054600

C (Continuation). DOCUMENTS CONSIDERED TO BE RELEVANT

| Category* | Citation of document, with indication, where appropriate, of the relevant passages | Relevant to claim No. |
|---|---|---|
| A | JP 2006-233116 A (Sumitomo Chemical Co., Ltd.), 07 September, 2006 (07.09.06), Claims; Par. Nos. [0048], [0117]; examples (Family: none) | 1-6 |
| A | JP 2006-182851 A (Sumitomo Chemical Co., Ltd.), 13 July, 2006 (13.07.06), Claims; Par. Nos. [0125], [0169]; examples (Family: none) | 1-6 |
| A | JP 2004-224881 A (Sumitomo Chemical Co., Ltd.), 12 August, 2004 (12.08.04), Claims; Par. Nos. [0047], [0064]; examples (Family: none) | 1-6 |
| A | JP 9-183809 A (Sumitomo Chemical Co., Ltd.), 15 July, 1997 (15.07.97), Full text (Family: none) | 1-6 |
| A | JP 7-501845 A (Exxon Chemical Patents Inc.), 23 February, 1995 (23.02.95), Full text & US 5475075 A & WO 1993/012151 A1 | 1-6 |
| P,X | JP 2007-191534 A (Sumitomo Chemical Co., Ltd.), 02 August, 2007 (02.08.07), Full text (Family: none) | 1-6 |

Form PCT/ISA/210 (continuation of second sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 58019309 A
- JP 9087313 A


### Non-patent literature cited in the description


- KOBUNSHI BUNSEKI HANDBOOK. KINOKUNIYA COMPANY LTD
- *JMS-REV. MACROMOL. CHEM. PHYS.,* 1989, vol. C29 (2, 3), 201-317